**Europäisches Patentamt**

**European Patent Office**

**Office européen des brevets**

(19)

(11) Veröffentlichungsnummer: **0 019 125**
**A1**

(12) # EUROPÄISCHE PATENTANMELDUNG

(21) Anmeldenummer: 80102268.2

(22) Anmeldetag: 26.04.80

(51) Int. Cl.³: **C 09 J 3/16**
**C 08 L 75/04, B 42 C 9/00**

(30) Priorität: 17.05.79 DE 2919931

(43) Veröffentlichungstag der Anmeldung:
26.11.80 Patentblatt 80/24

(84) Benannte Vertragsstaaten:
AT FR IT NL

(71) Anmelder: Reinhard Mohn GmbH
Carl-Bertelsmann-Strasse 161
D-4830 Gütersloh 1(DE)

(72) Erfinder: Kwauka, Gerd-Georg, Dipl.-Ing.
Sebastianweg 15
D-4830 Gütersloh 11(DE)

(72) Erfinder: Plümer, Jürgen, Ing.-grad.
Trakehner Strasse 10
Verl 1(DE)

(74) Vertreter: Patentanwälte Dr. Solf & Zapf
Postfach 13 02 19
D-5600 Wuppertal 1(DE)

(54) **Klebebindung sowie Verfahren zu ihrer Herstellung.**

(57) Klebebindung mit einem großen Flexibilitätsbereich für Buchblocks oder dergleichen, wobei das Klebemittel aus einem Duromer auf der Basis eines lösungsmittelarmen, vorzugsweise lösungsmittelfreien, Zweikomponentenklebers besteht, sowie Verfahren zur Herstellung der Klebebindung unter Verwendung eines Polyurethanklebers.

EP 0 019 125 A1

Croydon Printing Company Ltd.

Klebebindung sowie Verfahren zu ihrer Herstellung

Die Erfindung liegt auf dem Gebiet der Buchbinderei und betrifft eine Klebebindung sowie ein Verfahren zu ihrer Herstellung.

Die Technik der Klebebindung läßt sich im wesentlichen in die drei folgenden Verfahrensabschnitte aufgliedern: Herstellen des Buchblocks, Herstellen der Buchdecke und Einhängen des Buchblocks in die Buchdecke. Die Erfindung befaßt sich mit der Herstellung des Buchblocks.

Die Buchblockherstellung beginnt mit dem Schneiden und Falten der bedruckten Bogen. Als nächster Schritt folgt das Vorrichten, wobei z. B. Einzelblätter und Vorsätze angeklebt und Beilagen eingesteckt werden. Dann werden in der Regel die Falzbogen in Bogenmagazine der Zusammentragemaschine eingelegt und automatisch zusammengetragen. Anschließend erfolgt die Fadenheftung oder Klebebindung und dann das Trennen der Doppelformate und das dreiseitige Beschneiden des Buchblocks. Wenn ein gerundeter Buchrücken vorgesehen ist, werden die beschnittenen Buchblocks gerundet und abgepreßt, wodurch die Bücher "leichtgängiger" werden. Die nächsten Arbeitsschritte können das Begazen, Kapitalen und Hinterkleben sein, falls dies erforderlich ist. Damit ist der Buchblock fertig und kann in die Decke eingehängt werden.

Zur Herstellung einer Klebebindung sind bisher Dispersionskleber und Schmelzkleber verwendet worden. Die vollautomatische Herstellung einer Klebebindung mit einem Dispersionskleber erfolgt im Klebebinder, in den die Buchblocks einlaufen. Vorher werden sie gerüttelt und aufgestoßen und dann in eine Buchblockzange geklemmt. Danach durchlaufen die Buchblocks zwei Frässtationen, in denen die Rückenfalze abgefräst werden, wobei die dabei anfallenden Papierschnitzel abgesaugt werden müssen. Es folgen drei Rückenbearbeitungsstationen, in denen der Rücken des Buchblocks aufgerauht, eingekerbt und von Staub und Schnitzeln befreit wird. Dann erreichen die Buchblocks Leimwerke, in denen die Rücken ggf. zunächst mit einem niedrigviskosen Vorleim und dann mit einem Hauptleim höherer Viskosität bestrichen werden. Nach dem Durchlaufen des Hauptleimwerks sind je nach Produkt unterschiedliche Arbeitsgänge möglich. Wenn es sich um eine Broschüre mit zweifach gerilltem Kartonumschlag handelt, wird unmittelbar der Umschlag am Rücken angeklebt. Bei Broschüren mit vierfach gerilltem Kartonumschlag erfolgt eine zusätzliche Seitenbeleimung durch Auftragen eines schmalen Leimstreifens. Wenn es sich bei dem geplanten Produkt um ein fest gebundenes Buch handelt, durchläuft der Buchblock eine Fälzelstation. Der um den Rücken herumgreifende Fälzelstreifen gibt dem Block eine zusätzliche Festigkeit. Danach durchläuft die Broschüre oder der Buchblock eine Anpreßstation und wird zum Trockenaggregat weitergeleitet, in dem die Trocknung des Leims erfolgt. Vorzugsweise wird die Trocknung mittels Hochfrequenzenergie durchgeführt.

- 3 -

Damit ist der Arbeitsabschnitt der Klebebindung abgeschlossen.

Bei der Verwendung von Dispersionsklebern für die
Klebebindung ist die Viskosität des Klebers beim
Auftrag von besonderer Bedeutung für die Bindequalität. Bei zu hoher Viskosität dringt der Klebstoff
nicht ausreichend in den aufgerauhten und eingekerbten Buchrücken ein und führt zu mangelhafter Klebung.
Bei zu niedriger Viskosität dringt der Klebstoff zu
tief zwischen die einzelnen Blätter. Besonders bei
schwer benetzbaren Papieren werden - wie bereits
erwähnt - zwei Klebstoffe mit unterschiedlicher Viskosität eingesetzt, wobei zuerst eine Vorleimung mit
einem niedrigviskosen Klebstoff und dann die Hauptleimung mit höherer Viskosität erfolgt.

Schmelzklebstoffe bestehen aus schmelzfähigen hochmolekularen organischen Verbindungen. Sie werden bei
Temperaturen zwischen 150 und $200^{\circ}$ C verarbeitet. Die
Klebung erfolgt durch Erstarren der aufgetragenen
Schmelze mit hoher Abbindegeschwindigkeit. Von Bedeutung bei der Klebebindung mit Schmelzklebstoffen
sind die Fräsung des Buchrückens und eine gründliche
Befreiung vom Frässtaub. Schmelzklebstoffe werden
hauptsächlich zur Herstellung relativ kurzlebiger
Druckerzeugnisse in hohen Auflagen eingesetzt, z. B.
zur Herstellung von Katalogen, Zeitschriften, Werbebroschüren und Taschenbüchern. Nach dem derzeitigen
Stand der Technik läßt sich bei einigen Schmelzklebstoffen eine gewisse Versprödung nach längerer Zeit
noch nicht ganz ausschalten.

Für die Haltbarkeit klebegebundener Bücher und Broschüren mit mehr als etwa 300 Seiten spielt die so-

- 4 -

genannte Klammerwirkung im Bereich des Buchrückens eine besondere Rolle. Maßgebend für den Grad der Klammerwirkung sind die Rückenbearbeitung, z. B. die Einkerbtiefe, die Auftragstärke des Klebstoffes, die Eindringtiefe des Klebstoffes und die Elastizität des Klebefilms. Bei zu schwacher Klammerwirkung schlägt sich das Buch flach auf und kann im Rücken auseinanderbrechen. Bei zu starker Klammerwirkung lassen sich die Seiten nicht genügend öffnen. Bei richtiger Klammerwirkung bildet sich eine Rundung des Rückens, so daß sich die Beanspruchung gleichmäßig über den Rücken verteilt.

Die Festigkeit der Klebebindung wird in der Regel mit einem sogenannten Pull-Test geprüft. Beim Pull-Test wird ein Blatt des Buches oder der Broschüre mit einer steigenden Zugspannung belastet, bis entweder ein Leimriß oder ein Papierriß auftritt. Die Mindestbelastung, die ein klebegebundenes Produkt aushalten muß, liegt beim Pull-Test zwischen 0,5 und 0,6 kp/cm Rückenlänge.

Die Bindequalität der Klebebindung ist von vielen Faktoren abhängig. Wesentliche Faktoren dabei sind jedoch die Papiersorte und die Art des verwendeten Klebstoffes. Es gibt Papiersorten, die unter Verwendung von Dispersionsklebern keine Klebebindung mit ausreichender Bindequalität ergeben, und es gibt andere Papiersorten, die mit den thermoplastischen Schmelzklebern nicht gebunden werden können. Insbesondere treten Probleme auf, wenn in einem Buchblock mehrere Papierqualitäten vorhanden sind, von denen eine oder mehrere keine ausreichenden Adhäsionskräfte mit dem gewählten Klebstoff entwickeln. Darüber hinaus gibt es Papiersorten, die mit den be-

überhaupt/

kannten Klebstoffen keine Klebebindung mit ausreichenden Pull-Werten ermöglichen und für die daher eine andere Bindung wie Faden- oder Drahtheftung vorzusehen ist. In vielen Fällen gelingt eine Klebebindung nur, wenn vorher eine aufwendige Rückenbearbeitung erfolgt. Dabei wird der Rücken beispielsweise eingekerbt, gefräst und aufgerauht, wobei der Kern des Papiers freigelegt wird. Erst dadurch gelingt es, eine ausreichende Wechselwirkung zwischen Klebstoff und Papier herbeizuführen. Wichtig bei der Rückenbearbeitung ist, daß die anfallenden Papierschnitzel sowie der Staub sorgfältig beseitigt werden, damit die Grenzflächen zwischen Papier und Klebstoff abfallfrei sind.

Von besonderem Nachteil bei den bekannten Klebebindungen ist, daß die Klebstoffe relativ hohe Verarbeitungsenergien erfordern. Dispersionskleber müssen getrocknet werden. Dazu sind beachtliche Energiemengen erforderlich. Die thermoplastischen Schmelzkleber dagegen benötigen - wie bereits angedeutet - hohe Verarbeitungstemperaturen und insofern hohe Wärmeenergie.

Ein weiterer wesentlicher Nachteil ist beiden Klebstoffsorten gemeinsam. Der Flexibilitäts- bzw. Elastizitätsbereich der Klebebindung ist zu eng. Bei Temperaturen unter $0^\circ$ C kann es zu Kantenbrüchen und in vielen Fällen bei Temperaturen über $60^\circ$ C zur Auflösung der Klebebindung kommen. Die Elastizität der Klebebindung ist im wesentlichen eine Funktion der Wechselwirkungen zwischen Papier und Klebstoff und kann daher kaum beeinflußt werden.

Aufgabe der Erfindung ist, eine Klebebindung zu schaffen, deren Flexibilitätsbereich weit unter $0^\circ$ C und bis über $+ 60^\circ$C reicht und Pull-Werte bei allen Papiersorten erreicht, die über dem Minimalwert von 0,5 kp/ cm Rückenlänge liegen.

Diese Aufgabe wird durch eine Klebebindung gelöst, bei der das Klebemittel aus einem Duromer auf der Basis eines lösungsmittelarmen, vorzugsweise lösungsmittelfreien, Zweikomponentenklebers besteht. Vorzugsweise wird die Klebebindung durch ein Polyurethan gewährleistet.

Zweikomponentenkleber sind bekannt. Handelsübliche Zweikomponentenkleber eignen sich jedoch nicht für die Klebebindung, da sie den Anforderungen an Klebkraft, Elastizität und Wärmestandfestigkeit nicht in allen Punkten genügen. Vor allem haben sie bisher jedoch noch keinen Eingang in die Buchbinderei gefunden, weil Topfzeiten zu beachten sind und die Handhabung der Gemische in der Buchbinderei Probleme aufwirft. Da das verarbeitungsfertige Gemisch wegen begrenzter Lebensdauer nicht bevorratet werden kann, dürfen die Komponenten erst kurz vor der Verarbeitung gemischt werden. Das Auftragssystem muß so beschaffen sein, daß die Dosierung auch unterschiedlich viskoser Gemische auf das klebezubindende Produkt exakt eingestellt werden kann. Hierfür geeignete Misch- und Auftragssysteme sind auf dem Klebebindesektor nicht bekannt. Außerdem muß Schaumbildung im Klebstoffilm vermieden werden.

Im Falle der Kantenklebung bei der Klebebindung mindert die Schaumbildung, die durch die Kantenoberfläche sehr wahrscheinlich durch Keimbildung noch unterstützt wird, die Klebkraft ganz erheblich, so daß keine ausreichenden Pull-Werte der Klebebindung gewährleistet werden können. Die Erfindung löst alle Probleme durch die Auswahl bestimmter Zweikomponentenkleber und vornehmlich dadurch, daß u.a. die Schaumbildung bei diesen Duromeren unterdrückt wird. Hinzukommt, daß zur Auswahl bestimmter Zweikomponentenkleber noch eine besondere Auswahl bezüglich der Zusätze wie Härter, Beschleuniger, Füllstoff und Zusatzstoff getroffen wird.

Bevorzugt werden nach der Erfindung Polyurethankleber. Derartige Kleber führen bei der Klebebindung zu unerwartet hohen Pull-Werten. Die Pull-Werte sind wahrscheinlich darauf zurückzuführen, daß der Klebstoff beim Aushärten nicht nur durch Adhäsion und mechanische Verankerung die Klebebindung gewährleistet, sondern auch eine durch eine chemische Reaktion mit der Papierfaser hervorgerufene Verbindung schafft. Insofern liegt nach dem Aushärten des Zweikomponentenklebers eine optimale Klebebindung vor. Die bekannten Kleber bewirken jeweils lediglich Adhäsion (Hotmelt) oder Adhäsion und mechanische Verankerung (Dispersionskleber).

Die Herstellung der erfindungsgemäßen Klebebindung erfolgt vorzugsweise mit einem Zweikomponentenpolyurethankleber. Die eine Komponente besteht aus einem Isocyanat, die andere Komponente aus einem linearen und/oder verzweigten Polyol mit Ester- oder Äthergruppen. Der Polyester, insbesondere der lösungsmittelfreie, flüssige Polyalkohol, kennzeichnet sich durch einen OH-Gruppengehalt zwischen 2 und 10 %, vorzugsweise 4 bis 6 %. Weitere Kennzeichen des Polyalkohols sind: Säurezahl $< 2$, Dichte bei $20^{\circ}$ C etwa 101 g/cm$^3$, Viskosität bei $20^{\circ}$ C etwa 5000 cP und Wassergehalt $< 0,2$ %. Von diesen Stoffen wird vorzugsweise ein Produkt ausgewählt, das unter dem Handelsnamen "Desmophen 1150" gehandelt wird. Diese Komponente kann mit einer weiteren Komponente, einem vorzugsweise linearen hydroxylgruppenhaltigen Polyäther, als Weichmacher vermengt werden. Die Menge des Polyäthers richtet sich nach der gewünschten Flexibilität; denn die Zusatzmenge beeinflußt insbesondere diese Eigenschaft der fertigen Klebebindung. Der Polyäther sollte einen Hydroxylgruppengehalt von 1 bis 7 %, vorzugsweise von 2,5 bis 4 %, und eine Säurezahl $< 1$, eine Dichte bei $20^{o}$C von etwa 1 g/cm$^3$, eine Viskosität bei $20^{o}$ C von etwa 200 cP sowie einen Wassergehalt $< 0,1$ % aufweisen. Ein solches Produkt wird beispielsweise unter dem Handelsnamen "Desmophen 1600 U" vertrieben. Die Komponenten werden mit einem Härter versetzt, wozu ein lösungsmittelfreies, bei $20^{o}$ C flüssiges Isocyanat dient. Vorzugsweise wird ein lösungsmittelfreies Gemisch von Diphenylmethan-4,4'-diisocyanat und polymeren Anteilen verwendet (Desmodur VK) mit einem NCO-Gehalt (Isocyanatgruppen) von 10 bis 40 %, vorzugsweise von 28 bis 32 %, und einer Dichte bei $20^{o}$ C von etwa 1,22 g/cm$^3$.

Bekanntlich wird dem Polyol eine stöchiometrische Menge Isocyanat zugesetzt, die erforderlich ist, um die OH-Gruppen mit den NCO-Gruppen zu kompensieren. Durch diese Maßnahme gelingt es mit Sicherheit, Schaumbildung zu vermeiden und die OH-Gruppen der Papierzellulose sowie der Luftfeuchtigkeit oder der Papierfeuchtigkeit zu binden, so daß der Klebstoff risikolos verwendbar wird. Erfindungsgemäß ist jedoch vorgesehen, daß über dieser Äquivalenz ein bis zu vorzugsweise 30 % höherer NCO-Gehalt vorliegt.

flüssiger/
Dem Klebstoffgemisch kann ferner ein vorzugsweise Beschleuniger zugesetzt werden. Vorzugsweise wird ein tertiäres Amin, vorzugsweise mit einer Dichte von etwa 0,9 g/cm$^3$ verwendet (Desmorapid PP), das die Abbindung des Hydroxylpolyesters (Desmophen 1150) und die Abbindung und Vernetzung des Gemisches aus Hydroxylpolyester und Hydroxylpolyäther (Desmophen 1150 + Desmophen 1600 U) beschleunigt. Die Zusatzmenge beträgt je nach gewünschter Elastizität und Reaktionsgeschwindigkeit vorzugsweise 0,5 bis 2 Gew.-%, bezogen auf die Bindemittelmenge. Der Beschleuniger kann vorzugsweise Zinkoktoat oder Dibutylzinndilaurat enthalten.

Nach einer besonderen Ausführungsform der Erfindung wird dem Gemisch aus Bindemittel, ggf. Weichmacher, Härter und Beschleuniger, ein Mittel zugesetzt, das Wasser oder Wasserdampf adsorbieren kann. Dazu kann insbesondere Zeolith L-Paste dienen (ca. 50 %-ig in Rizinusöl). Die Paste wird vorzugsweise in Mengen von 10 bis 20 Gew.-%, bezogen auf Polyol und Isocyanat, zugesetzt. Die Zeolith L-Paste sollte eine Dichte bei 20$^o$C von etwa 1,25 g/cm$^3$, einen Porendurchmesser von etwa 3 Å und eine Viskosität von etwa 25000 mPa s sowie ein Wasseraufnahmevermögen von etwa 11 % haben.

Ferner ist zweckmäßig, dem Gemisch einen Füllstoff, vorzugsweise Kreide, Schwerspat oder Quarzmehl, zuzusetzen, und zwar in Mengen von 10 bis 70 Gew.-%, bezogen auf Polyol und Isocyanat.

Im folgenden werden Mischungen angegeben, die besonders gute Pull-Werte der Klebebindung ergeben, wobei die Zusammensetzungen in Gew.-% angegeben sind.

- 10 -

Tabelle 1

| Polyester | 14 - 87 | Gew.-% |
|---|---|---|
| Polyäther | 0 - 29 | " |
| Isocyanat | 11 - 54 | " |
| Beschleuniger | 0 - 2,0 | " |
| Zeolith L-Paste | 0 - 23 | " |
| Füllstoff | 0 - 80 | " |

Besonders bevorzugte werden die folgenden Gemische:

Tabelle 2

| Polyester | 18 - 73 | Gew.-% |
|---|---|---|
| Polyäther | 0 - 27 | " |
| Isocyanat | 14 - 40 | " |
| Beschleuniger | 0 - 1 | " |
| Zeolith L-Paste | 0 - 20 | " |
| Füllstoff | 0 - 50 | " |

Anhand der folgenden Beispiele werden Mischungen für besondere Klebebindungen angegeben:

Beispiel 1 - Harte Klebebindung

| Kreide | 150 g |
|---|---|
| Zeolith L-Paste | 30 g |
| Desmophen 1150 | 120 g |
| Desmorapid DB | 0,9 g |
| Desmodur VK | 60,4 g |

Diese Komponenten wurden miteinander gemischt. Es ergab sich eine Topfzeit von 23 Minuten. In dieser Zeit wurde der Zweikomponentenkleber auf den Buchblockrücken in an sich bekannter Weise zur Herstellung der

- 11 -

Klebebindung aufgetragen. Der Buchblock bestand aus Bogen aus Papier (120 g/m$^2$ maschinengestrichen satiniert). Nach dem Erhärten des Klebstoffilms konnten Pull-Werte von 1,4 kp/cm Rückenlänge ermittelt werden.

Beispiel 2 - Weiche Klebebindung

| | |
|---|---|
| Kreide | 150 g |
| Zeolith L-Paste | 30 g |
| Desmophen 1150 | 60 g |
| Desmophen 1600 U | 30 g |
| Desmorapid DB | 0,5 g |
| Desmodur VK | 43 g |

Nach der Mischung ergab sich eine Topfzeit von 14 Minuten. Es wurden nach der Erhärtung der Klebebindung Pull-Werte von 1,4 kp/cm Rückenlänge festgestellt.

Beispiel 3 - Klebebindung ohne Füllstoff

| | | |
|---|---|---|
| Zeolith L-Paste | 30,3 | g |
| Desmophen 1150 | 100 | g |
| Desmorapid PP | 0,5 | g |
| Desmodur VK | 52 | g |

Nach der Mischung ergab sich eine Topfzeit von 11 Minuten und bei der Klebebindung ein Pull-Wert von 1,35 kp/cm Rückenlänge.

Aus den Beispielen geht hervor, daß die Pull-Werte überraschend hoch liegen. Es konnte festgestellt werden, daß die Klebebindungen noch ausreichend flexibel bis - 40$^o$ C sind. Sie halten außerdem Temperaturen bis etwa 140$^o$ C stand. Die Klammerwirkung ist ideal. Obwohl die Topfzeit relativ kurz ist, kann in überraschender Weise dennoch eine übliche Weiterverarbeitung wie Runden und Abpressen der Buchblockrücken erfolgen. Die Klebebindung ist dazu noch ausreichend verformbar. Alle Papiersorten können klebegebunden werden mit Pull-Werten, die über 0,6 kp/cm Rückenlänge liegen. Die Komponenten der Klebstoffmischungen sind alle an sich bekannt. Einige davon werden u.a. auch in Zweikomponentenklebstoffgemischen verarbeitet, jedoch nicht in der erfindungsgemäßen Kombination für den Klebebindesektor, so daß bei der Erfindung eine echte Auswahl getroffen wird, wobei das Ergebnis nicht zu erwarten war.

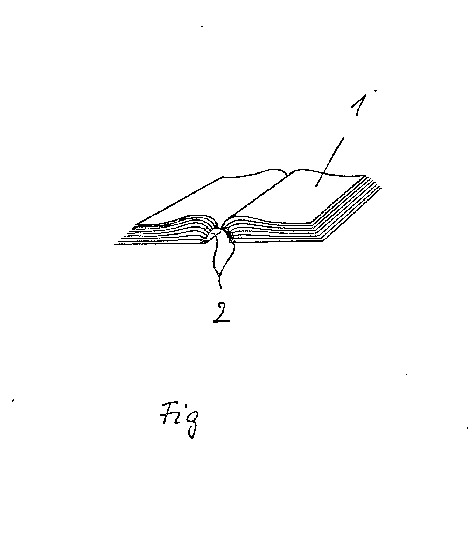

Anhand der Zeichnung wird die Erfindung beispielhaft näher erläutert. Die dargestellte Figur zeigt schematisch einen aufgeschlagenen Buchblock 1 mit einer Klebebindung 2, die erfindungsgemäß hergestellt worden ist. Die Klebebindung 2 besteht aus Polyurethan und bewirkt - wie dargestellt - eine ideale Klammerwirkung.

0019125

Ansprüche:

1. Klebebindung eines Buchblocks oder dergleichen, d a d u r c h  g e k e n n z e i c h n e t, daß das Klebemittel aus einem Duromer auf der Basis eines lösungsmittelarmen, vorzugsweise lösungsmittelfreien, Zweikomponentenklebers besteht.

2. Klebebindung nach Anspruch 1, d a d u r c h  g e - k e n n z e i c h n e t, daß das Klebemittel ein Polyurethan ist.

3. Verfahren zur Herstellung der Klebebindung nach Anspruch 1 und/oder 2, d a d u r c h  g e - k e n n z e i c h n e t, daß ein Polyurethankleber verwendet wird.

4. Verfahren nach Anspruch 3, d a d u r c h  g e - k e n n z e i c h n e t, daß als Bindemittel des Zweikomponenten-Polyurethanklebers ein linearer und/oder verzweigter Polyester, insbesondere ein verzweigter lösungsmittelfreier, flüssiger Polyalkohol mit Äther- und Estergruppen, und mit 2 bis 10 %, vorzugsweise 4 bis 6 %, Hydroxylgruppen verwendet wird, das mit einem Härter versetzt wird, wobei als Härter ein lösungsmittelfreies, flüssiges Isocyanat verwendet wird.

5. Verfahren nach Anspruch 4, d a d u r c h g e - k e n n z e i c h n e t, daß als Härter ein lösungsmittelfreies Gemisch von Diphenylmethan- 4,4'-Diisocyanat und polymeren Anteilen verwendet wird mit einem NCO-Gehalt von 10 bis 40 %, vorzugsweise von 28 bis 32 %.

6. Verfahren nach Anspruch 4 oder 5, d a d u r c h g e k e n n z e i c h n e t, daß der Härter in einer Menge zugesetzt wird, daß über der Äquivalenz ein bis zu vorzugsweise 30 % höherer NCO- Gehalt vorliegt.

7. Verfahren nach einem oder mehreren der Ansprüche 4 bis 6, d a d u r c h g e k e n n z e i c h - n e t, daß dem Bindemittel ein weiteres Binde- mittel, vorzugsweise ein linearer hydroxylgruppen- haltiger Polyäther als Weichmacher zugesetzt wird.

8. Verfahren nach Anspruch 7, d a d u r c h g e - k e n n z e i c h n e t, daß ein Polyäther zuge- setzt wird, der einen Hydroxylgruppengehalt von 1 bis 7, vorzugsweise von 2,5 bis 4 %, aufweist.

9. Verfahren nach einem oder mehreren der Ansprüche 4 bis 8, d a d u r c h g e k e n n z e i c h - n e t, daß dem Gemisch ein Beschleuniger, vorzugsweise ein tertiäres Amin zugesetzt wird.

10. Verfahren nach Anspruch 9, d a d u r c h g e - k e n n z e i c h n e t, daß ein Beschleuniger zugesetzt wird, der Zinkoktoat und/oder Dibutylzinndilaurat enthält.

11. Verfahren nach einem oder mehreren der Ansprüche 4 bis 10, d a d u r c h  g e k e n n z e i c h - n e t , daß dem Gemisch ein Mittel zugesetzt wird, das Abspaltprodukte adsorbiert.

12. Verfahren nach Anspruch 11, d a d u r c h  g e - k e n n z e i c h n e t , daß als Adsorptions- mittel Zeolith L-Paste zugesetzt wird.

13. Verfahren nach einem oder mehreren der Ansprüche 4 bis 12, d a d u r c h  g e k e n n z e i c h - n e t , daß dem Gemisch ein Füllstoff, vorzugsweise gefällte Kreide, zugesetzt wird.

14. Verfahren nach einem oder mehreren der Ansprüche 4 bis 13, d a d u r c h  g e k e n n z e i c h - n e t , daß als Zweikomponentenkleber ein Gemisch folgender Zusammensetzung verwendet wird:

| | | |
|---|---|---|
| Polyester | 14 - 87 | Gew.-% |
| Polyäther | 0 - 29 | " |
| Isocyanat | 11 - 54 | " |
| Beschleuniger | 0 - 2,0 | " |
| Zeolith L-Paste | 0 - 23 | " |
| Füllstoff | 0 - 80 | " |

15. Verfahren nach Anspruch 14, d a d u r c h  g e - k e n n z e i c h n e t , daß als Zweikomponenten- kleber ein Gemisch mit folgender Zusammensetzung verwendet wird:

| | | | |
|---|---|---|---|
| Polyester | 18 - 73 | Gew.-% | |
| Polyäther | 0 - 27 | " | |
| Isocyanat | 14 - 40 | " | |
| Beschleuniger | 0 - 1 | " | |
| Zeolith L-Paste | 0 - 20 | " | |
| Füllstoff | 0 - 60 | " | |

1/1

Fig

0019125

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>FR - A - 2 207 968</u> (U.C.B.)<br><br>* Seiten 8,9; Patentansprüche 1, 6-8; Seite 3, Zeile 25 bis Seite 4, Zeile 19; Seite 4, Zeile 33 bis Seite 5, Zeile 27; Seite 7, Beispiel 4 * | 1-15 |
| | <u>DE - A - 2 151 286</u> (XEROX CORP.)<br><br>* Seite 9, Patentanspruch 1; Seite 4, letzter Absatz bis Seite 5, Absatz 1 * | 1 |
| A | <u>DE - C - 950 189</u> (BASF)<br><br>* Seite 2, Patentanspruch; Seite 1, Zeilen 22-26 * | 1 |

**KLASSIFIKATION DER ANMELDUNG (Int.Cl. ³)**

C 09 J 3/16
C 08 L 75/04
B 42 C 9/00

**RECHERCHIERTE SACHGEBIETE (Int. Cl. ³)**

C 09 J 3/16
B 42 C 9/00
B 42 C 9/02

**KATEGORIE DER GENANNTEN DOKUMENTE**

X: von besonderer Bedeutung

A: technologischer Hintergrund

O: nichtschriftliche Offenbarung

P. Zwischenliteratur

T: der Erfindung zugrunde liegende Theorien oder Grundsätze

E: kollidierende Anmeldung

D: in der Anmeldung angeführtes Dokument

L. aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort. Den Haag | Abschlußdatum der Recherche 01.08.1980 | Prüfer V. PUYMBROEK |
|---|---|---|